**Europäisches Patentamt**

**European Patent Office**

**Office européen des brevets**

(11) Veröffentlichungsnummer: **0 047 845**
**B1**

(12) **EUROPÄISCHE PATENTSCHRIFT**

(45) Veröffentlichungstag der Patentschrift:
**20.03.85**

(21) Anmeldenummer: **81105865.0**

(22) Anmeldetag: **24.07.81**

(51) Int. Cl.⁴: **B 41 J 31/00**

(54) **Korrigierbares Farbband.**

(30) Priorität: **09.09.80 CH 6776/80**

(43) Veröffentlichungstag der Anmeldung:
**24.03.82 Patentblatt 82/12**

(45) Bekanntmachung des Hinweises auf die Patenterteilung:
**20.03.85 Patentblatt 85/12**

(84) Benannte Vertragsstaaten:
**DE FR GB IT SE**

(56) Entgegenhaltungen:
**DE - A - 2 503 640**
**DE - B - 1 192 219**
**US - A - 3 825 470**

(73) Patentinhaber: **Franz Büttner AG, Gewerbestrasse 9,
CH-8132 Egg/ZH (CH)**

(72) Erfinder: **Hartmann, Heinz, Seestrasse 13,
CH-8617 Mönchaltdorf (CH)**

(74) Vertreter: **Justitz-Wormser, Daisy P., Dipl.-Chem. et al,
PATENTANWALTS-BUREAU ISLER AG
Postfach 6940 Walchestrasse 23, CH-8023 Zürich (CH)**

## Beschreibung

Die modernen «lift-off»-Korrektursysteme an Schreibmaschinen und dergleichen ermöglichen es, ein falsch geschriebenes Schriftzeichen durch einfaches Übertippen mit demselben Zeichen unter Einschaltung einer Korrekturtaste ohne weitere Hilfsmittel zu löschen. Zu diesem Zweck wurden Schreibmaschinenfarbbänder entwickelt, welche Schriftzeichen abgeben, die durch Aufpressen eines adhäsiven Materials annähernd vollständig von der Unterlage entfernt werden können. Ein solches Farbband ist z. B. in der US-A-3 825 470 beschrieben. Es weist eine Farbschicht auf, die aus einer Lösungsmitteldispersion auf ein bandförmiges Substrat aufgetragen wurde. Diese Schicht enthält neben einem Pigment oder einem in der Farbschicht unlöslichen organischen Farbstoff ein Harz-Bindemittel sowie ein Modifiziermittel, das das Harz-Bindemittel härtet und ihm eine gewisse Brüchigkeit verleiht und seine Haftung an der Unterlage herabsetzt. Das Modifiziermittel besteht hierbei aus einem Gemisch von weissem Mineralöl und Fettsäureestern, ausgewählt aus Octylestern von Fettsäuren, Isopropylpalmitat, Butylstearat und Gemischen davon.

Es wurde nun gefunden, dass eine merkliche Ersparnis an Modifiziermittel erzielt werden kann, die nicht nur kommerziell von Belang ist, sondern sich insbesondere durch verbesserte Korrekturresultate auszeichnet, wenn als Modifiziermittel gemäss der vorliegenden Erfindung ein halogenierter Kohlenwasserstoff mit mindestens 14 Kohlenstoffatomen zugesetzt wird.

Gegenstand der vorliegenden Erfindung ist daher ein korrigierbares Farbband für Schreibmaschinen und dergleichen mit einer farbabgebenden, schriftbildenden Schicht auf einem Träger, wobei diese Schicht ein Pigment, ein Kunstharzbindemittel und ein Modifiziermittel enthält, welches mit dem Kunstharzbindemittel höchstens teilweise verträglich ist, das dadurch gekennzeichnet ist, dass die Schicht als Modifiziermittel einen halogenierten Kohlenwasserstoff mit mindestens 14 Kohlenstoffatomen enthält.

Bevorzugte Modifiziermittel sind z. B. Cetylchlorid und Stearylchlorid. Diese Chlorkohlenwasserstoffe können als alleiniges Modifiziermittel zugegeben sein, sie können gegebenenfalls aber auch zusammen mit einem sekundären Modifiziermittel, das das Netzwerk des Bindemittels schwächt, z. B. einem höheren Carbonsäureester, verwendet werden.

Die Menge des Modifiziermittels beträgt im allgemeinen bis 50 Gewichtsprozent, bezogen auf das Trockengewicht der Schicht. Im Gemisch mit einem sekundären Modifiziermittel eingesetzt, kann der Gehalt bis auf ca. 5 Gewichtsprozent herabgesetzt werden.

Die Herstellung der neuen Farbbänder erfolgt auf bekannte Weise. Im allgemeinen wird eine Stammlösung zubereitet, die das Kunstharzbindemittel, ein bekanntes, sich im Handel befindliches Produkt, in einem ebenfalls bekannten Lösungsmittel, z. B. einem Gemisch von Toluol und Isopropanol, gelöst enthält. Diese Bindemittellösung wird sodann mit dem halogenierten Kohlenwasserstoff und gegebenenfalls einem sekundären Modifiziermittel vermischt und anschliessend das Pigment in dieser Mischung dispergiert. Die erhaltene Dispersion wird schliesslich mit einer weiteren Portion Lösungsmittel auf die gewünschte Konsistenz verdünnt. Das Auftragen dieser Masse auf den Träger (z. B. einen Polyäthylenträger) erfolgt in einer bekannten Beschichtungsvorrichtung, worauf die Masse, z. B. mit warmer Luft, getrocknet wird. Das Gewicht der getrockneten Schicht beträgt im allgemeinen 1,5 bis 3,0 g/m², vorzugsweise 1,8 bis 2,3 g/m².

Präparation 1

| | |
|---|---:|
| Isopropanol | 45,00 kg |
| Toluol | 45,00 kg |
| Äthylcellulose N7 (Hercules Powder Company, Delaware) | 10,00 kg |
| | 100,00 kg |

Das Kunstharzbindemittel wird unter Rühren zur Stammlösung 1 gelöst.

Präparation 2

| | |
|---|---:|
| Isopropanol | 30,00 kg |
| Toluol | 30,00 kg |
| «Emerez 1533» (Emery Industries; Cincinnati, Ohio) (Zusammensetzung Siehe US-A-3 825 470, Spalte 3, Zeile 50–56) | 40,00 kg |
| | 100,00 kg |

Das Bindemittel wird unter Rühren zur Stammlösung 2 gelöst.

Beispiel 1

| | | |
|---|---|---:|
| 1 | Stammlösung 2 | 13,50 kg |
| 2 | Stammlösung 1 | 6,00 kg |
| 3 | Cetylchlorid | 4,50 kg |
| 4 | «Ondina 68» | 4,50 kg |
| 5 | «Regal 400 R» (Russ) | 5,00 kg |
| | Isopropanol | 33,50 kg |
| | Toluol | 33,00 kg |
| | | 100,00 kg |

«Ondina 68» ist ein Produkt von Shell und basiert auf aliphatischem, naphthenischem Mineralöl ohne Aromate.

Herstellung

1 bis 4 mischen, 5 zugeben und 15 Minuten unter einem hochtourigen Rührer mischen, dann drei Passagen durch eine Rührwerkkugelmühle, 6 bis 7 mischen und einrühren.

Beispiel 2

| | | |
|---|---|---:|
| 1 | Stammlösung 2 | 14,00 kg |
| 2 | «Lipinol 0» | 4,70 kg |
| 3 | Cetylchlorid | 4,70 kg |
| 4 | «Regal 400 R» (Russ) | 5,00 kg |
| 5 | Isopropnalol | 35,80 kg |
| 6 | Toluol | 35,80 kg |
| | | 100,00 kg |

«Lipinol 0» ist ein Produkt der Chemischen Werke Hüls und beruht auf höheren Fettsäureestern.

Herstellung

1 bis 3 mischen, 4 zugeben und 15 Minuten unter einem hochtourigen Rührer mischen, dann drei Passagen durch eine Rührwerkkugelmühle, 5 bis 6 mischen und einrühren.

Beispiel 3

| 1 | Stammlösung 2 | 14,00 kg |
|---|---|---|
| 2 | Stearylchlorid | 9,40 kg |
| 3 | «Regal 400 R» | 5,00 kg |
| 4 | Isopropanol | 35,80 kg |
| 5 | Toluol | 35,80 kg |
| | | 100,00 kg |

Herstellung

1 bis 3 zusammengeben und 15 Minuten unter hochtourigem Rührer mischen, dann drei Passagen durch eine Rührwerkkugelmühle, 4 bis 5 mischen und einrühren.

**Patentansprüche**

1. Korrigierbares Farbband für Schreibmaschinen und dergleichen mit einer farbabgebenden, schriftbildenden Schicht auf einem Träger, wobei diese Schicht ein Pigment, ein Kunstharzbindemittel und ein Modifiziermittel enthält, welches mit dem Kunstharzbindemittel höchstens teilweise verträglich ist, dadurch gekennzeichnet, dass die Schicht als Modifiziermittel einen halogenierten Kohlenwasserstoff mit mindestens 14 Kohlenstoffatomen enthält.

2. Farbband nach Patentanspruch 1, dadurch gekennzeichnet, dass die Schicht ein Chlorparaffin enthält.

3. Farbband nach Patentanspruch 2, dadurch gekennzeichnet, dass die Schicht Cetylchlorid enthält.

4. Farbband nach Patentanspruch 2, dadurch gekennzeichnet, dass die Schicht Stearylchlorid enthält.

5. Farbband nach einem der Patentansprüche 1 bis 4, dadurch gekennzeichnet, dass die Schicht ausserdem ein sekundäres Modifiziermittel enthält, z.B. einen höheren Carbonsäureester.

6. Farbband nach einem der Patentansprüche 1 bis 5, dadurch gekennzeichnet, dass die Schicht bis 50 Gewichtsprozent an Modifiziermittel, bezogen auf die Trockensubstanz, enthält.

**Claims**

1. A correctable ink ribbon for typewriters and the like, comprising an ink-yielding indicia-forming coating on a support, said coating containing a pigment, a synthetic resin binder and a modifier which is at most partially compatible with the synthetic resin binder, characterised in that the modifier contained in the coating is a halogenated hydrocarbon having at least 14 carbon atoms.

2. An ink ribbon according to claim 1, characterised in that the coating contains a chloroparaffin.

3. An ink ribbon according to claim 2, characterised in that the coating contains cetyl chloride.

4. An ink ribbon according to claim 2, characterised in that the coating contains stearyl chloride.

5. An ink ribbon according to any one of claims 1 to 4, characterised in that the coating also contains a secondary modifier, e.g. a higher carboxylic acid ester.

6. An ink ribbon according to any one of claims 1 to 5, characterised in that the coating contains up to 50% by weight of modifier, based on dry substance.

**Revendications**

1. Ruban encreur de correction pour machines à écrire et similaires, présentant une couche cédant de l'encre et formant l'écriture sur un support, ladite couche contenant un pigment, un liant de résine synthétique et un modificateur qui est au maximum partiellement compatible avec ledit liant de résine synthétique, lequel ruban est caractérisé en ce que la couche contient comme modificateur un hydrocarbure halogéné contenant au moins 14 atomes de carbone.

2. Ruban encreur selon la revendication 1, caractérisé en ce que la couche contient une chloroparaffine.

3. Ruban encreur selon la revendication 2, caractérisé en ce que la couche contient du chlorure de cétyle.

4. Ruban encreur selon la revendication 2, caractérisé en ce que la couche contient du chlorure de stéaryle.

5. Ruban encreur selon l'une quelconque des revendications 1 à 4, caractérisé en ce que la couche contient en outre un modificateur secondaire, par exemple un ester supérieur d'acide carboxylique.

6. Ruban encreur selon l'une quelconque des revendications 1 à 5, caractérisé en ce que la couche contient jusqu'à 50% en poids de modificateur par rapport à la substance sèche.